# EUROPEAN PATENT SPECIFICATION

(11) **EP 3 826 270 B1**
(45) Date of publication and mention of the grant of the patent: **25.10.2023**
(21) Application number: 20198680.9
(22) Date of filing: 24.12.2015
(51) Int. Cl.: H04L 67/1095, H04L 65/40

(54) **COOPERATIVE CONTROL METHOD FOR USER EQUIPMENT, USER EQUIPMENT, AND COMMUNICATIONS SYSTEM**
KOOPERATIVES STEUERUNGSVERFAHREN FÜR BENUTZERGERÄT, BENUTZERGERÄT UND KOMMUNIKATIONSSYSTEM
PROCÉDÉ DE COMMANDE COOPÉRATIVE POUR ÉQUIPEMENT UTILISATEUR, ÉQUIPEMENT UTILISATEUR ET SYSTÈME DE COMMUNICATION

(30) Priority: 04.01.2015 CN 201510003833
(43) Date of publication of application: 26.05.2021
(62) Divisional of application: 15875167.7
(73) Proprietor: HUAWEI TECHNOLOGIES CO., LTD., Shenzhen, Guangdong 518129 (CN)
(72) Inventor: YAN, Wei, Shenzhen, Guangdong 518129 (CN); CHEN, Chen, Shenzhen, Guangdong 518129 (CN)
(74) Representative: Maiwald GmbH

(56) References cited:
- US-A1- 2009 204 885
- US-A1- 2011 119 392
- US-B1- 6 957 398

## Description

### TECHNICAL FIELD

The present invention relates to the field of communications technologies, and in particular, to a cooperative control method for user equipment, user equipment, and a communications system.

### BACKGROUND

With rapid development of mobile Internet technologies, there are more types of user equipment, such as a smart television, a smartphone, and a tablet computer, and then various interconnection solutions between user equipments occur. Multi-screen interaction (multi-screen interaction) between user equipments can be implemented by using these interconnection solutions. The multi-screen interaction is performing operations such as transmission, parse, display, and control on multimedia (such as audio, video, and image) content on screens of different user equipments such as a television, a mobile phone, and a personal computer, so that displayed content can be shared in real-time on the different user equipments, to provide better user experience.
US 2011/119392 A1 describes a method and apparatus for providing collaborative interactive video streaming, which enables a plurality of clients to concurrently view and interactively modify the playout of a video program.

A mirror (Mirror) function is a type of basic experience of the multi-screen interaction, and refers to transmitting, in real-time, content displayed on a screen of one user equipment to a screen of another user equipment for displaying. The mirror function is mainly applicable to a non-media scenario, such as business presentation or a multiplayer game.

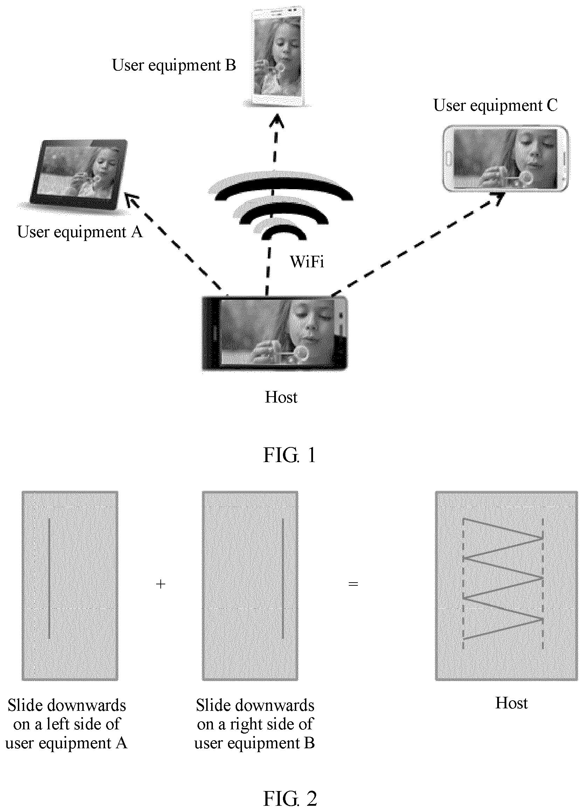

In the prior art, as shown in FIG 1, multiple user equipments (such as a smartphone, a tablet computer, and a smart television) may form a home local area network by using a network device (such as a wireless router and a home gateway). After all user equipments establish interconnection channels according to a specific protocol, one user equipment such as a host (Host) shown in FIG 1 may mirror, in real-time, content displayed on a screen of the host to another user equipment such as user equipment A, user equipment B, and user equipment C in the figure, so as to implement group sharing. In addition, after the screen of the host is shared with user equipment, an operation such as tap or slide performed by a user on the user equipment may be transmitted to the host in a form of control data through the interconnection channel, so that the user of the user equipment may reversely control the host. In this way, multiple parties that use the mirror function may interact and communicate.

In the prior art solution, content of one host may be shared with multiple user equipments. Therefore, when user equipments perform reverse control, multiple pieces of control data may be injected into the host, and the host cannot respond normally because of mutual interference of the control data from the user equipments. For example, as shown in FIG 2, when a user slides downwards on a left side of a screen of the user equipment A, and another user slides downwards on a right side of a screen of the user equipment B, because of an event sampling delay and mutual interference of control data of the user equipments, a series of left-right slides finally forms on the host as a feedback. Consequently, mutual interference is caused when multiple user equipments perform reverse control, and user experience is affected.

### SUMMARY

Aspects of the present invention provide a cooperative control method for user equipment, and a host as defined by the appneded claims, so as to resolve, to some extent, an interference problem caused by control operations of multiple users in a multi-screen interaction scenario. Therefore, multiple users can perform a real-time cooperative operation on multiple user equipments.

According to a first aspect, an embodiment of the present invention provides a cooperative control method for user equipment, applied to a host, where the host is interconnected to first user equipment and second user equipment by using a network, the host runs a target application, and displays a graphical interface generated by the target application, and the first user equipment, the second user equipment, and the graphical interface displayed on the host have consistent content; and the method includes:
receiving first operation data collected by the first user equipment in a first time interval, where the first operation data is generated according to an operation performed by a user on the first user equipment;
receiving, in a timing period of a started timer, second operation data collected by the second user equipment in a second time interval, where the second operation data is generated according to an operation performed by a user on the second user equipment;
combining the first operation data and the second operation data after the timing period ends, to obtain combined operation data;
processing the combined operation data, where the processing step includes: updating a currently displayed graphical interface of the target application according to the combined operation data; and
synchronizing an updated graphical interface to the first user equipment and the second user equipment.

In a first possible implementation of the first aspect, the first operation data includes first single-point touch data used to represent a first single-point touch event, and the second operation data includes second single-point touch data used to represent a second single-point touch event; and
the combining, by the host, the first operation data and the second operation data to obtain combined operation data includes:
combining, by the host, the first single-point touch data and the second single-point touch data into multi-point touch data used to represent a multi-point touch operation, where the combined operation data is the multi-point touch data.

In a second possible implementation of the first aspect, the first user operation data includes first multi-point touch data used to represent a first multi-point touch event, and the second user operation data includes second single-point touch data used to represent a second single-point touch event; and
the combining, by the host, the first user operation data and the second user operation data to obtain combined operation data includes:
combining, by the host, multiple pieces of single-point touch data used to represent multiple single-point touch events and the second single-point touch data, to obtain third multi-point touch data used to represent a third multi-point touch event, where the combined operation data is the third multi-point touch data, and the multiple single-point touch events are single-point touch events included in the first multi-point touch event.

In a third possible implementation of the first aspect, the local user operation data is generated according to an operation performed by a user on the host; and
correspondingly, the combining the first operation data and the second operation data includes:
combining the local user operation data, the first operation data, and the second operation data, to obtain the combined operation data.

With reference to any one of the first aspect, or the first to the third possible implementations of the first aspect, in a fourth possible implementation, the updating a currently displayed graphical interface of the target application according to the combined operation data includes:
creating a virtual multi-point touch event according to the combined operation data, and delivering the virtual multi-point touch event to a window of the target application by using a window manager of the host, so that the target application responds to the virtual multi-point touch event, and the responding to the virtual multi-point touch event includes: updating the currently displayed graphical interface of the target application.

With reference to any one of the first aspect, or the first to the fourth possible implementations of the first aspect, in a fifth possible implementation, the timer starts when or after the first operation data sent by the first user equipment is received.

According to a second aspect, an embodiment of the present invention provides a cooperative control method for user equipment, applied to a host, where the host is interconnected to first user equipment and second user equipment by using a network, the host runs a target application, and displays a graphical interface generated by the target application, and the first user equipment, the second user equipment, and the graphical interface displayed on the host have consistent content; and the method includes:
receiving, by the host, first operation data collected by the first user equipment in a first time interval, where the first operation data is generated according to an operation performed by a user on the first user equipment;
processing, by the host, the first operation data, where the processing step includes: entering a reverse control processing state, and updating a currently displayed graphical interface of the target application according to the first operation data; and receiving second operation data collected by the second user equipment in a second time interval, where the second operation data is generated according to an operation performed by a user on the second user equipment; and
discarding the second operation data when the host is currently in the reverse control processing state.

In a first possible implementation of the second aspect, the method further includes: entering, by the host, an idle state after the target application completes processing the first operation data.

In a second possible implementation of the second aspect, the method further includes: entering, by the host, the idle state after the host receives operation data representing that the user of the first user equipment stops the operation.

With reference to any one of the second aspect, or the first to the second possible implementations of the second aspect, in a third possible implementation, the processing includes: updating the currently displayed graphical interface of the target application according to the second operation data; and after the target application completes processing the second operation data, or after the host receives operation data representing that the user of the second user equipment stops the operation, entering, by the host, the idle state.

According to a third aspect, an embodiment of the present invention provides a cooperative control method for user equipment, applied to a host, where the host is interconnected to first user equipment and second user equipment by using a network, the host runs a first application and a second application, a first area of a screen of the host displays a graphical interface of the first application, a second area of the screen of the host displays a graphical interface of the second application, and the first area and the second area are independent of each other; a graphical interface displayed on the first user equipment and the graphical interface displayed in the first area have consistent content, and a graphical interface displayed on the second user equipment and the graphical interface displayed in the second area have consistent content; and the method includes:
receiving, by the host, first operation data sent by the first user equipment, where the first operation data is generated according to an operation performed by a user on the graphical interface displayed on the first user equipment;
processing, by the host, the first operation data, where the processing step includes: updating a currently displayed graphical interface of the first application in the first area according to the first operation data;
synchronizing, by the host, an updated graphical interface of the first application to the first user equipment;
receiving, by the host, second operation data sent by the second user equipment, where the second operation data is generated according to an operation performed by a user on the second user equipment;
processing, by the host, the second operation data, where the processing step includes: updating a currently displayed graphical interface of the second application in the second area according to the second operation data; and
synchronizing, by the host, an updated graphical interface of the second application to the second user equipment.

In a first possible implementation of the third aspect, the first sampling timer starts after or when the user operates on the first user equipment, and the second sampling timer starts after or when the user operates on the second user equipment.

According to a fourth aspect, an embodiment of the present invention provides a host, including: a processor, a memory, a network interface, and a screen, where the host is connected to first user equipment and second user equipment by using the network interface, the processor reads and executes a target application stored in the memory, and displays, by using the screen, a graphical interface generated by the target application, and the first user equipment, the second user equipment, and the graphical interface displayed on the host have consistent content;
the network interface is configured to: receive first operation data collected by the first user equipment in a first time interval, and receive, in a timing period of a started timer, second operation data collected by the second user equipment in a second time interval, where the first operation data is generated according to an operation performed by a user on the first user equipment, and the second operation data is generated according to an operation performed by a user on the second user equipment; and
the processor is configured to: combine the first operation data and the second operation data after the timing period ends, to obtain combined operation data; update the graphical interface of the target application according to the combined operation data and display an updated graphical interface on the screen; and send content included in the updated graphical interface of the target application to the first user equipment and the second user equipment by using the network interface.

In a first possible implementation of the fourth aspect, the first operation data includes first single-point touch data used to represent a first single-point touch event, and the second operation data includes second single-point touch data used to represent a second single-point touch event; and
the combining the first operation data and the second operation data specifically includes: combining the first single-point touch data and the second single-point touch data into multi-point touch data used to represent a multi-point touch operation, where the combined operation data is the multi-point touch data.

In a second possible implementation of the fourth aspect, the local user operation data is generated according to an operation performed by a user on the host; and the combining the first operation data and the second operation data specifically includes: combining the local user operation data, the first operation data, and the second operation data, to obtain the combined operation data.

With reference to any one of the fourth aspect, or the first to the second possible implementations of the fourth aspect, in a third possible implementation, the memory stores a timer program, and the processor reads and executes the timer program, to start the timer.

According to a fifth aspect, an embodiment of the present invention provides a host, including: a processor, a memory, a network interface, and a screen, where the host is connected to first user equipment and second user equipment by using the network interface, the processor reads and executes a target application stored in the memory, and displays, by using the screen, a graphical interface generated by the target application, and the first user equipment, the second user equipment, and the graphical interface displayed on the host have consistent content;
the network interface is configured to: receive first operation data collected by the first user equipment in a first time interval, where the first operation data is generated according to an operation performed by a user on the first user equipment;
the processor is configured to: set a status mark used to represent that the host is currently in a reverse control processing state, and process the first operation data, where the processing includes: updating a currently displayed graphical interface of the target application according to the first operation data;
the network interface is further configured to: receive second operation data collected by the second user equipment in a second time interval, where the second operation data is generated according to an operation performed by a user on the second user equipment; and
the processor is further configured to discard the second operation data when it is determined that the host is currently in the reverse control processing state.

In a first possible implementation of the fifth aspect, the processor is further configured to: when completing processing the first operation data, set a status mark used to represent that the host is currently in an idle state.

With reference to the fifth aspect or the first possible implementation of the fifth aspect, in a second possible implementation, the processing includes: updating the currently displayed graphical interface of the target application according to the second operation data; and when completing processing the second operation data, or after the network interface receives operation data representing that the user of the second user equipment stops the operation, the processor is configured to set the status mark used to represent the host is currently in the idle state.

According to a sixth aspect, an embodiment of the present invention provides a host, including: a processor, a memory, a network interface, and a screen, where the host is connected to first user equipment and second user equipment by using the network interface; the processor is configured to: read and execute a first application and a second application that are stored in the memory, display a graphical interface of the first application in a first area of the screen, and display a graphical interface of the second application in a second area of the screen; and a graphical interface displayed on the first user equipment and the graphical interface displayed in the first area have consistent content, and a graphical interface displayed on the second user equipment and the graphical interface displayed in the second area have consistent content;
the network interface is configured to: receive first operation data sent by the first user equipment, and receive second operation data sent by the second user equipment, where the first operation data is generated according to an operation performed by a user on the graphical interface displayed on the first user equipment, and the second operation data is generated according to an operation performed by a user on the second user equipment; and
the processor is configured to: update a currently displayed graphical interface of the first application according to the first operation data, and display, in the first area, an updated graphical interface of the first application; update a currently displayed graphical interface of the second application according to the second operation data, and display, in the second area, an updated graphical interface of the second application; and send content included in the updated graphical interface of the first application to the first user equipment by using the network interface, and send content included in the updated graphical interface of the second application to the second user equipment by using the network interface.

According to a seventh aspect, an embodiment of the present invention provides a communications system, including: a host, first user equipment, and second user equipment, where the host has a communications connection with the first user equipment and the second user equipment, the host runs a target application, and displays a graphical interface generated by the target application, and the first user equipment, the second user equipment, and the graphical interface displayed on the host have consistent content;
the host is configured to: receive first operation data collected by the first user equipment in a first time interval, and receive, in a timing period of a started timer, second operation data collected by the second user equipment in a second time interval; combine the first operation data and the second operation data after the timing period ends, to obtain combined operation data; update a currently displayed graphical interface of the target application according to the combined operation data; and send content of an updated graphical interface to the first user equipment and the second user equipment; where the first operation data is generated according to an operation performed by a user on the first user equipment, and the second operation data is generated according to an operation performed by a user on the second user equipment; and
the first user equipment and the second user equipment are configured to: receive and display the content of the updated graphical interface.

With reference to any one of the foregoing aspects or the possible implementations of the foregoing aspects, the first sampling timer starts after or when the user of the first user equipment starts the operation, and the second sampling timer starts after or when the user of the second user equipment starts the operation.

With reference to any one of the foregoing aspects or the possible implementations of the foregoing aspects, the first time interval, the second time interval, and the timing period of the timer are equal.

With reference to any one of the foregoing aspects or the possible implementations of the foregoing aspects, the first time interval, the second time interval, and the timing period of the timer are all 30 ms.

With reference to any one of the first aspect, the fourth aspect, the seventh aspect, or the possible implementations of the first aspect, the fourth aspect, and the seventh aspect, operation data reported by the first user equipment and operation data reported by the second user equipment have different indexes. In addition, in one multi-point touch operation procedure, an index of operation data corresponding to each user equipment cannot change, and the host records, according to a reporting sequence, operation data reported by the user equipments.

With reference to any one of the first aspect, the fourth aspect, the seventh aspect, or the possible implementations of the first aspect, the fourth aspect, and the seventh aspect, touch data corresponding to a touch event is used to represent operation information such as a type and coordinates of the touch event.

With reference to any one of the first aspect, the fourth aspect, the seventh aspect, or the possible implementations of the first aspect, the fourth aspect, and the seventh aspect, the host simulates, according to the combined operation data, a virtual event representing the user operations, and then, injects the virtual event into an I/O service at a kernel library layer of the host, so that an operating system accepts the event, and a currently running application identifies and responds to the virtual event.

With reference to any one of the second aspect, the fifth aspect, or the possible implementations of the second aspect and the fifth aspect, when the user operation data reported by the first user equipment is received, and after the reverse control processing state is entered, if user operation data reported by the first user equipment continues to be received, responding and processing continue to be performed.

With reference to any one of the second aspect, the fifth aspect, or the possible implementations of the second aspect and the fifth aspect, the host performs status marking, determining, and switching by setting an identifier of a register.

According to the cooperative control method for user equipment, the terminal device, and the communications system provided in the embodiments of the present invention, a host uses operation data of each user equipment as one control data input, combines multiple pieces of user operation data of multiple user equipments into multi-point operation data, and then injects the multi-point operation data into an application for processing, so as to resolve a reverse control interference problem in a multi-party interaction control scenario. Therefore, multiple parties can perform a perfect cooperative operation on multiple devices.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 shows a schematic diagram of a multi-screen interaction system according to an embodiment of the present invention;
FIG. 2 shows a schematic diagram of a reverse control method for user equipment in the prior art;
FIG. 3 shows a schematic diagram of an application scenario according to an embodiment of the present invention;
FIG. 4 shows a schematic diagram of a multi-party cooperative scenario according to an embodiment of the present invention;
FIG. 5 shows a flowchart of a cooperative control method in a multi-party cooperative scenario according to an embodiment of the present invention;
FIG. 6A and FIG 6B show a logical architecture diagram of a host according to an embodiment of the present invention;
FIG. 7 shows a schematic logical diagram of a mirror function according to an embodiment of the present invention;
FIG. 8 shows a schematic diagram of a structure of operation data according to an embodiment of the present invention;
FIG. 9 shows a flowchart of a cooperative control method in a multi-party cooperative scenario according to an embodiment of the present invention;
FIG. 10 shows a flowchart of a cooperative control method in a single-point mutual exclusion scenario according to an embodiment of the present invention;
FIG. 11 shows a schematic diagram of a reverse control isolation scenario according to an embodiment of the present invention;
FIG. 12 shows a flowchart of a cooperative control method in a reverse control isolation scenario according to an embodiment of the present invention;
FIG. 13 shows a flowchart of a cooperative control method in another scenario according to an embodiment of the present invention;
FIG. 14 shows a structural diagram of a host according to an embodiment of the present invention; and
FIG. 15 shows a structural diagram of another host according to an embodiment of the present invention.

### DESCRIPTION OF EMBODIMENTS

To make persons skilled in the art understand the technical solutions in the present invention better, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall in the protection scope of the present invention.

A data structure and code described in the embodiments of the present invention are usually stored in a computer readable storage medium, and the computer readable storage medium may be any device or media that can store code and/or data to be used by a computer system. The computer readable storage medium includes but is not limited to: a volatile memory, a non-volatile memory, magnetic and optical storage devices such as a disk driver, a tape, a CD (a compact disc), and a DVD (a digital video disc), or other media that can store code and/or data.

A method and a process described in the embodiments of the present invention may be implemented by using code and/or data. The code and data may be stored in the foregoing computer readable storage medium. When a computer system reads and runs the code and/or data stored in the computer readable storage media, the computer system may execute the method and process described in the embodiments of the present invention. In addition, the method and process described in the embodiments of the present invention may be integrated into hardware modules or apparatuses. These modules and apparatuses may include but be not limited to: an application-specific integrated circuit (ASIC) chip, a field programmable gate array (FPGA), a dedicated or shared processor that runs a specific software module or a segment of code at specific time, and/or another programmable logic device. When the hardware module or the apparatus is activated, the hardware module and the apparatus perform the method and the process integrated into the hardware module and the apparatus.

It should be further understood that, although terms such as "first" and "second" may be used in this specification to describe various components, these terms are only used to distinguish the components from each other. For example, without departing from the scope of the present invention, first user equipment may also be referred to as second user equipment, and similarly, the second user equipment may be referred to as the first user equipment.

The terms used in this specification of the present invention are merely for the purpose of illustrating specific embodiments, and are not intended to limit the present invention. The terms "a" and "the" of singular forms used in the description and the appended claims of the present invention are also intended to include plural forms, unless otherwise specified in the context clearly. It should also be understood that, the term "and/or" used in the specification indicates and includes any or all possible combinations of one or more associated features.

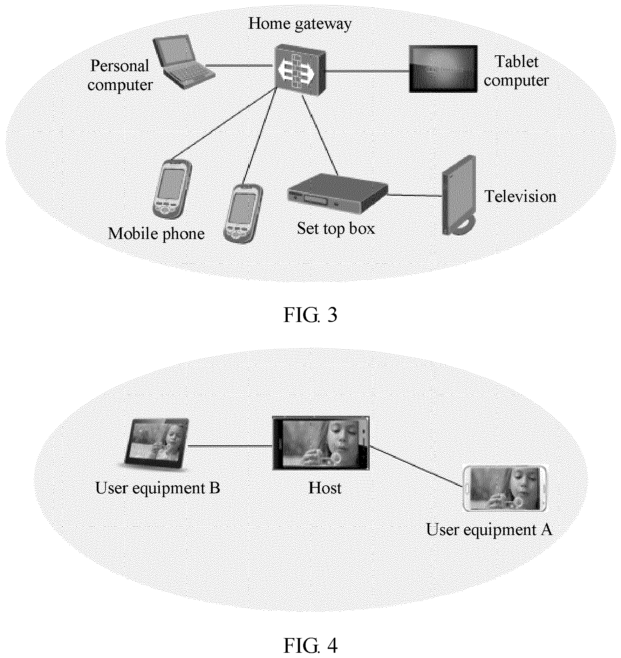

FIG. 3 shows a schematic diagram of a system structure in a typical application scenario according to an embodiment of the present invention. The system includes a home gateway and multiple user equipments (user device, UE) that are interconnected by using the home gateway, such as a personal computer (PC), a mobile phone (mobile phone), a tablet computer, and a set top box connected to a television. These user equipments form a home network by using the home gateway. The user equipments in the home network may implement content sharing and cooperative control on the basis of a specific protocol, for example, a standard protocol formulated by a DLNA (Digital Living Network Alliance, Digital Living Network Alliance). For example, one user equipment (the mobile phone in FIG 3 is used as an example) in the home network may share, in real-time, content displayed on the user equipment with another user equipment (the television and the tablet computer in FIG 3 are used as an example), so that multiple user equipments can display same content in real-time. The user equipment that initiates content sharing is usually referred to as a host, and based on an operation performed by a user on the host, the host may update content displayed on the host in real-time and synchronize the content to another user equipment. In addition, an operation such as tap or slide performed by a user on another user equipment may be transmitted to the host in a form of operation data through an interconnection channel. In this way, another user equipment may reversely control the host. A basic multi-screen interaction process based on the system shown in FIG 3 is described above. This embodiment of the present invention provides a cooperative control method for user equipment, to resolve an interference problem caused by control operations of multiple users in a multi-screen interaction scenario, and improve multi-screen interaction user experience. It should be noted that the host and the user equipment described in this embodiment of the present invention may be a mobile phone, a tablet computer, a portable media player, or another small electronic device including a digital media function.

The following describes in detail, with reference to different scenarios, the cooperative control method for user equipment in the embodiments of the present invention. It should be noted that in the embodiments of the present invention, user equipment A and user equipment B are usually used as an example to describe a technical solution of the present invention, but shall not be understood as a limitation on a quantity of user equipments. In addition, for ease of description and differentiation, in some cases, the user equipment A is also referred to as first user equipment, and the user equipment B is referred to as second user equipment.

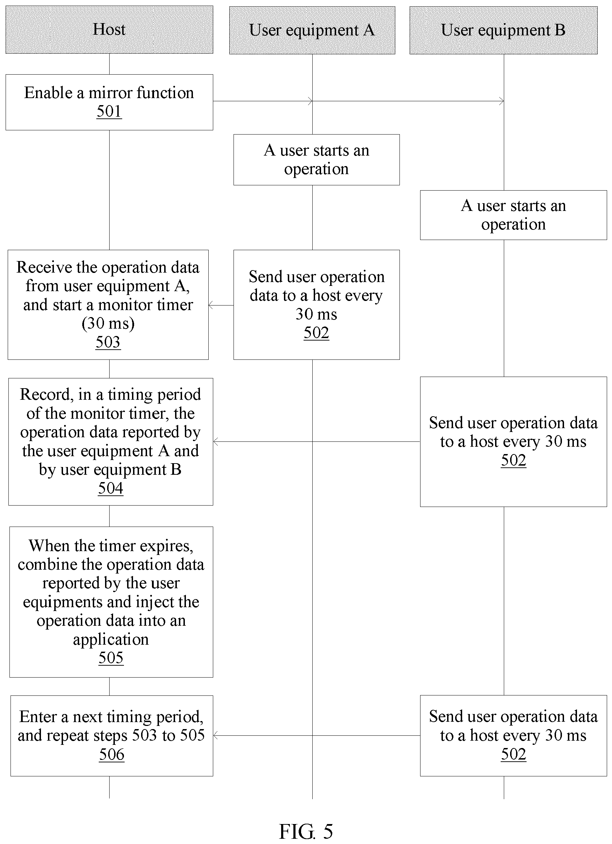

A cooperative control method for user equipment in a multi-party cooperative scenario, such as a multiplayer game scenario, is first described. As shown in FIG 4, in this scenario, after a host initiates multi-screen sharing, one or more user equipments (user equipment A and user equipment B in the figure are used as an example) may display the same content as the host in real-time. A touch operation of each user equipment is used as one input source, multiple inputs of multiple user equipments are combined into a multi-point touch operation, and then the multi-point touch operation is injected into the host (Host) for processing. Specifically, as shown in FIG 5, in the multi-party cooperative scenario, a cooperative control method for user equipment provided in an embodiment of the present invention mainly includes the following steps.

Step 501: A host enables a mirror (Mirror) function, so as to share, in real-time, content displayed on a screen of the host with user equipment A and user equipment B. For example, the host runs an application program, and displays a graphical interface generated by the application program. After the host enables the mirror function, a graphical interface currently displayed on the host is synchronously displayed on the user equipment A and the user equipment B. That is, the host, the user equipment A, and the user equipment B display a graphical interface with consistent content. It may be understood that, because screens have different sizes and different resolutions, a subtle difference may exist between graphical interfaces displayed on the host and displayed on the user equipment A and the user equipment B, but the host, the user equipment A, and the user equipment B display consistent content in essence.

Step 502: Separately start a sampling timer on the user equipment A and the user equipment B. It is assumed that a timing period of the sampling timer is TimerC. In the TimerC, the user equipment A and the user equipment B collect user operation data, and when the timer expires (that is, a current timing period of the timer ends), the user equipment A and the user equipment B separately report the user operation data to the host. The timing period TimerC of the timer may be set and adjusted according to an actual scenario, and 30 ms is a recommended value. Optionally, the sampling timers of the user equipment A and the user equipment B may simultaneously start or may not simultaneously start. For example, after the host enables the mirror function, user equipment may start a sampling timer when a user operates for the first time.

Step 503: After receiving operation data reported by any user equipment, the host starts a multi-point touch operation procedure and starts a monitor timer. It is assumed that a timing period of the monitor timer is TimerH, and the sampling period of the monitor timer may be adjusted according to an actual scenario, and 30 ms is a recommended value. It should be noted that a main function of starting the monitor timer by the host is to ensure that all user operation data in a specific delay range can be received, that is, to ensure that operation data "simultaneously" or "almost simultaneously" triggered by multiple users on different user equipments can be received and processed in a timely manner. For example, when or in a relatively short time interval (for example, 30 ms) after a user operates on the user equipment A, another user also operates on the user equipment B. Then, by setting a timer, the two pieces of operation data can be received in a timely manner for combination processing, so as to prevent the host from being interfered by other received operation data when the host is responding to and processing the operation data. It may be understood that another similar implementation that has a same or equivalent function as the monitor timer may be used to perform the same function, and this is not particularly limited in this embodiment of the present invention.

Step 504: The host records, in the TimerH, operation data reported by the user equipments. Operation data reported by different user equipments has different indexes (index), and the host may record, according to a reporting sequence, the operation data reported by the user equipments.

Step 505: When the TimerH timer expires, the host combines the collected operation data of the user equipments into combined operation data, and injects the combined operation data into an application program, so that the application program captures and processes the combined operation data. The processing step includes: updating a graphical interface of the application program according to the combined operation data and displaying an updated graphical interface.

Step 506: The monitor timer enters a next timing period, and the host repeats steps 503 to 505.

Step 507: When users of all user equipments stop operating and no operation data is reported to the host, the multi-point touch operation procedure ends, and the monitor timer stops. In one multi-point touch operation procedure, an index (index) of operation data corresponding to each user equipment cannot change.

Optionally, in an embodiment, operation data reported by user equipment may be single-point touch data, for example, operation data generated by a single-point touch event such as single-point down, single-point up, or single-point move, or may be multi-point touch data, for example, operation data generated by a multi-point touch event such as multi-point down, multi-point up, or multi-point move. The "single-point" in this embodiment of the present invention is a single touch point generated by a user's finger or a stylus on a touchscreen at the same time. For example, when a user uses one finger to perform some actions such as tap or slide on the touchscreen, data triggered and generated by these actions is the single-point touch data. Similarly, the "multi-point" is multiple touch points generated by a user's finger or a stylus on a touchscreen at the same time. For example, when a user simultaneously uses two fingers to perform some actions such as tap or slide on the touchscreen, data triggered and generated by these actions is the multi-point touch data. Generally, one touch operation of the user is regarded as one touch event from a perspective of user equipment operating system, for example, one single-point touch operation is regarded as one single-point touch event, and one multi-point touch operation is regarded as one multi-point touch event. In addition, each touch event triggers the operating system to generate corresponding touch data, to represent or record the touch event. More specifically, touch data is used to represent operation information such as a type and coordinates of a touch event corresponding to the touch data. For example, single-point touch data corresponding to a single-point touch event is used to represent operation information such as a type and coordinates of the single-point touch event. It should be noted that in this embodiment of the present invention, in some paragraphs, a touch event and touch data may not be obviously distinguished, and it needs to be determined according to a context whether a touch event specifically means an event or touch data corresponding to the touch event.

In an embodiment, if operation data received in a timing period of a monitor timer includes multiple pieces of single-point touch data (the multiple pieces of single-point touch data may be from different user equipments or may be from same user equipment, and this is not limited in this embodiment), a host may combine the received multiple pieces of single-point touch data into multi-point touch data used to represent a multi-point touch event, and inject the multi-point touch data into an application program for responding and processing. Operation data received by the host may include both single-point touch data and multi-point touch data. The multi-point touch data is used to represent a multi-point touch event, and one multi-point touch event usually includes multiple single-point touch events. Correspondingly, the multi-point touch data may include multiple pieces of single-point touch data corresponding to the multiple single-point touch events. In this case, the multiple pieces of single-point touch data corresponding to the multiple single-point touch events may be combined with another received single-point touch data, to obtain new multi-point touch data. The new multi-point touch data represents a multi-point touch event. Finally, the new multi-point touch data is injected into an operating system for responding and processing.

A basic procedure of cooperative control for the host and multiple user equipments is described above, and specific technical details vary with different logical architectures of hosts. An Android architecture is used as an example in the following to describe related technical details in detail. The host described in this embodiment of the present invention may be a mobile phone, a tablet computer, a portable media player, or another small electronic device including a digital media function.

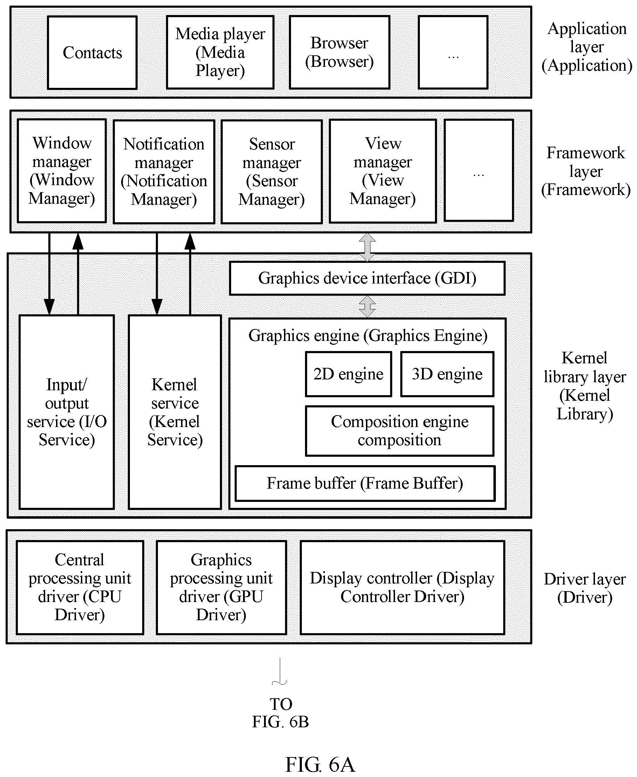

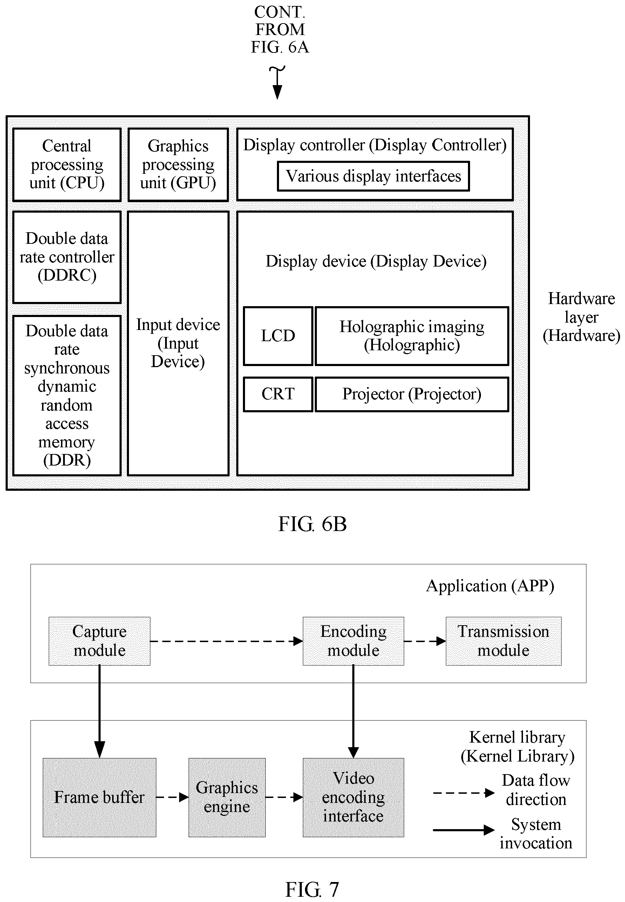

FIG. 6A and FIG 6B show a logical architecture diagram of a host according to an embodiment of the present invention. Referring to FIG 6A and FIG. 6B, a hardware layer of the host includes a central processing unit (Center Processing Unit, CPU), a graphics processing unit (Graphic Processing Unit, GPU), and the like. Certainly, the hardware layer of the host may further include a memory, an input/output device, a double data rate synchronous dynamic random access memory, a double data rate controller, a network interface, and the like. The input device may include a keyboard, a mouse, a touchscreen, and the like. The output device may include a display device, such as a liquid crystal display (Liquid Crystal Display, LCD), a cathode ray tube (Cathode Ray Tube, CRT), or a holographic imaging (Holographic), a projector (Projector). An operating system (such as Android or Firefox OS) and some application programs may run above the hardware layer. The operating system includes a driver layer, a kernel library layer, and a framework layer. The driver layer may include a CPU driver, a GPU driver, a display controller driver, and the like. A kernel library is a core part of the operating system, and includes an input/output service, a core service, a graphics device interface, a graphics engine (Graphics Engine) that implements CPU and GPU graphics processing, and the like. The graphics engine may include a 2D engine, a 3D engine, a composition (composition) engine, a frame buffer (Frame Buffer), and the like. The framework layer may include a window manger (Window Manger), a notification manager (Notification Manager), a sensor manager (Sensor Manager), a view manager (View Manager), and the like. In addition, the host further includes an application layer. The application layer may include a desktop (launcher), a media player (Media Player), a browser (Browser), and the like.

In addition, the application layer may include multiple types of application programs, such as a home screen (home), a media player (Media Player), and a browser (Browser).

Based on the foregoing logical architecture of the host, in this embodiment of the present invention, the mirror function described in step 501 is mainly used to capture an image on a screen of user equipment, invoke hardware of a device for encoding, and send encoded data to far end user equipment by means of network transmission for decoding and displaying. In an optional embodiment, as shown in FIG 7, the mirror function in step 501 may be implemented by an application program. The application program mainly includes a capture module, an encoding module, and a transmission module. Details are as follows.

The capture module reads data from the frame buffer (frame buffer) by opening "/dev/graphic/fb0" of a system device, to capture an image displayed by a display unit. If necessary, the capture module may rotate or scale the image by invoking the graphics engine (for example, a Copybit engine). Then, the encoding module encodes the image by invoking a video encoding interface (for example, an H.264 encoding interface) or a video encoding library that is at the kernel library layer. Finally, the transmission module sends the encoded image to the far end user equipment. It should be noted that the capture module and the encoding module need capability support provided by a chip platform, and greatly depend on the hardware layer.

In the foregoing method described in the embodiments of the present invention, after the host receives, in a timing period of a monitor timer, operation data reported by user equipment A and user equipment B, two groups of operation data (including operation data generated by tap or slide of a finger, by a function key, or the like) originally from completely different sources are combined into operation data of a same user at a host end, that is, operations of different users are regarded as multiple concurrent operations of a same user. Further, the host simulates, according to the combined operation data, a virtual event representing a user operation, and then, injects the virtual event into the I/O service of the kernel library layer of the host, so that the operating system accepts the event, and a currently running application identifies and responds to the event.

The Android system architecture shown in FIG 6A and FIG 6B is used as an example to provide detailed description of operation data combination and injection processes in step 505.

The host receives a slide event that is sent by the user equipment A and that is used to indicate a user's finger moving from coordinates (100, 100) to (100, 105). In a preset time interval (the event interval may be set by the monitor timer), a finger of a user of the user equipment B is also in a pressing state, and moves from coordinates (200, 200) to (200, 195). In this way, after the host receives two pieces of single-point touch data, the host may combine the two pieces of single-point touch data into multi-point touch data representing that two fingers of a user simultaneously slide. Specifically, the two pieces of single-point touch data may be combined into the multi-point touch data by using a PointerCoords array. For example, operation data reported by different user equipments has different indexes (index), and further, multiple pieces of single-point touch data may be stored in a form of an array according to an index of operation data and a sequence relationship of received operation data. Further, a multi-point touch event MotionEvent is created based on the combined multi-point touch data. The multi-point touch event MotionEvent is not triggered by the host, and is a virtual event manually created according to the combined multi-point touch data. The host may deliver the multi-point touch event MotionEvent to the I/O service at the kernel library layer by using a system method injectPointerEvent provided by the window manager (Windows Manager) at the framework layer. The I/O service is originally used to receive a physical event that is currently triggered by a hardware layer device and reported by using the driver layer. In this case, the created virtual event is regarded as a physical event, and reported to the window manager at the framework layer, so that a currently running application program captures and responds to the event. That the application program responds to the event specifically includes: updating a currently displayed graphical interface of the application program according to the event.

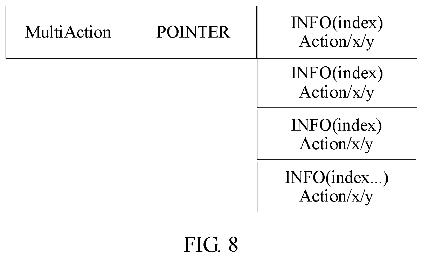

FIG. 8 shows a structure of operation data according to an embodiment of the present invention. According to FIG 8, the operation data mainly includes three fields: MultiAction, POINTER, and INFO(index). Definitions of the fields are as follows.

MultiAction: used to identify multi-point touch data, for example, multi-point touch data obtained by combining operation data of multiple user equipments. It may be understood that single-point touch data may be identified by using SingleAction.

POINTER: used to indicate a quantity of current operation data sources, that is, a quantity of user equipments whose operation data is combined into the multi-point touch data.

INFO(index): operation information of each user equipment, including information such as a specific event type and coordinates. The event type includes but is not limited to: single-point down (down), single-point up (up), single-point move (move), multi-point down (POINTER_DOWN), multi-point up (POINTER UP), and multi-point move (POINTER MOVE).

Based on the foregoing description of the data structure of the operation data, an example is used in the following to describe an operation data combination process.

If operation data reported by user equipment A is SingleAction POINTER=1 INFO (0) action=down coordinate=(0, 0),
and operation data reported by user equipment B is SingleAction POINTER=1 INFO (1) action=down coordinate=(100, 100),
combined operation data is MultiAction POINTER=2 INFO (0) pointer_down coordinate={(0, 0), (100, 100)}, or MultiAction POINTER=2 INFO (1) pointer_down coordinate^ (0, 0), (100, 100)}. It may be learned that by means of combination of operation data, operations of different users are regarded as multiple concurrent operations of a same user, so as to avoid mutual interference when multiple user equipments perform reverse control, and improve user experience.

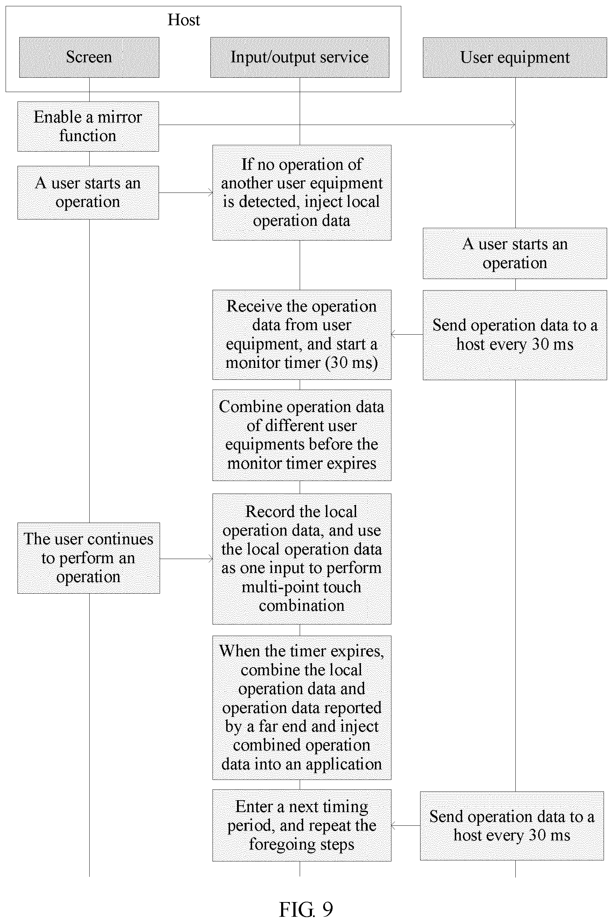

Based on description of the foregoing embodiment, in an optional embodiment, user operation data of a host may also be used as one input, and combined with user operation data reported by user equipment. With reference to FIG 9, a specific cooperative control method is described as follows.

Step 1: The host enables a mirror function, to share a screen with user equipment.

Step 2: If a user of the host performs an operation and no user of any user equipment performs an operation, the host directly injects user operation data into an application program for processing.

Step 3: Start a sampling timer on the user equipment. A timing period TimerC of the sampling timer may be adjusted according to an actual scenario, and 30 ms is a recommended value.

Step 4: The user equipment periodically collects user operation data in the TimerC.

Step 5: When the timing period TimerC of the timer ends (that is, the timer expires), report the user operation data to the host.

Step 6: At a host end, after user operation data is received from any user equipment, start a multi-point touch operation procedure and start a monitor timer. A timing period TimerH of the monitor timer may be adjusted according to an actual scenario, and 30 ms is a recommended value.

Step 7: Record, in the TimerH, user operation information reported by user equipments.

Step 8: If the user of the host performs an operation, intercept user operation data of the host, use the operation data as one input, and combine the operation data with the user operation information reported by the user equipments.

Step 9: When one timing period of the monitor timer ends, combine the collected user operation data of the user equipments and the user operation data set at the host end into multi-point touch data, and inject the multi-point touch data into the host for processing.

Step 10: Repeat steps 4 to 9.

Step 11: When users of all user equipments and of the host stop operating, and no operation data is injected into the host end, the multi-point touch operation procedure ends, and the monitor timer stops. The user operation data of the host and user operation data reported by different user equipments are distinguished by using different indexes (index), and the host may record, according to a sequence, the operation data reported by the user equipments. In one multi-point touch operation procedure, an index of user operation data corresponding to each input cannot change.

The foregoing processing procedure is basically consistent with that described in FIG 5, except that the user operation data of the host is intercepted and used as one input of the multi-point touch event to participate in event combination. For implementation details of the event combination, refer to description of the foregoing embodiments. Details are not described herein.

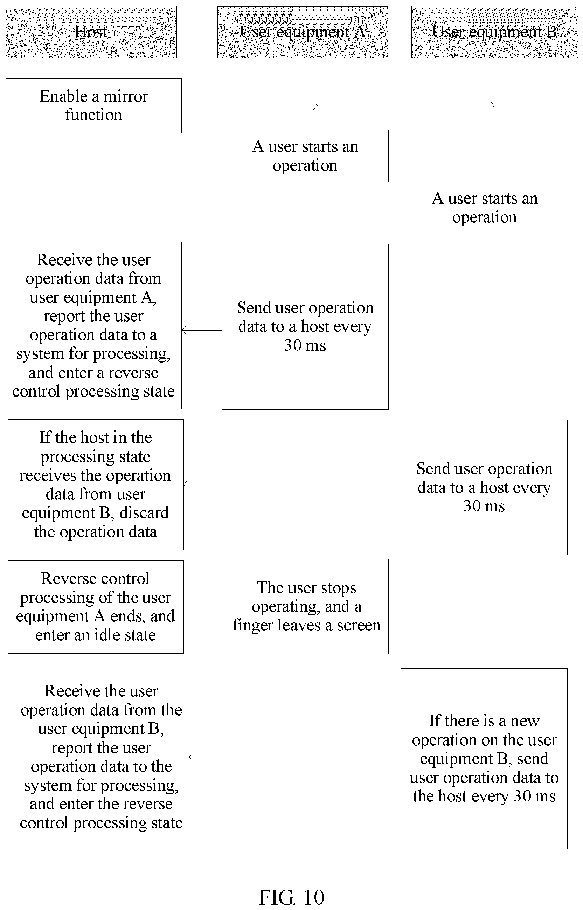

The cooperative control method for user equipment in the multi-party cooperative scenario and a related apparatus embodiment are described above, and a cooperative control method for user equipment in a single-point mutual exclusion scenario is described in the following. The single-point mutual exclusion scenario includes scenarios such as picture sharing, and advertising with slides. In this scenario, for operations simultaneously happening on multiple user equipments, a host injects only one input of reverse control, to avoid interference between operations. As shown in FIG 10, a specific procedure is as follows.

Step 1: The host enables a mirror function, to share a screen with user equipment A and user equipment B.

Step 2: Separately start a sampling timer on the user equipment A and the user equipment B.

Step 3: The user equipment A and the user equipment B collect user operation data in a timing period of the sampling timer.

Step 4: When the sampling timer expires (that is, a current timing period of the sampling timer ends), the user equipment A and the user equipment B separately report the user operation data to the host. For specification of the sampling timer, refer to description of the foregoing embodiments.

Step 5: At a host end, after user operation data reported by any user equipment (for example, the user equipment A) is received, inject the user operation data into a system for processing, and enter a reverse control processing state.

Step 6: In this case, if a user performs an operation on the user equipment B, and user operation data is reported to the host, the host discards the user operation data of the user equipment B.

Step 7: If a user of the user equipment A stops operating, for example, a finger leaves a screen, operation data used to represent that the user of the user equipment A stops operating is sent to the host.

Step 8: The host ends the reverse control processing state, and enters an idle (Idle) state.

Step 9: In this case, if the user performs an operation on the user equipment B, and user operation data is reported to the host, the host injects the user operation data of the user equipment B into the system for processing, and enters the reverse control processing state.

Optionally, in an embodiment, after a host receives user operation data reported by user equipment A, injects the user operation data into a system for processing, and enters a reverse control processing state, if the host continues to receive user operation data reported by the user equipment A, the host may continue responding and processing. If the host receives user operation data reported by another user equipment, the host directly discards the user operation data.

Optionally, in an embodiment, switch of the host from a reverse control processing state to an idle state is triggered by an event indicating that a user stops operating. As described in steps 5 to 7, after the host receives the user operation data of the user equipment A, and enters the reverse control processing state, if the host receives operation data representing that a user of the user equipment A stops operating, the host switches from the reverse control processing state to the idle state. Correspondingly, after the host enters the idle state, if the host receives user operation data from any user equipment, the host enters the reverse control processing state again. This process is repeatedly performed.

Optionally, in another embodiment, switch of the host from a reverse control processing state to an idle state may be triggered according to a processing state of user operation data on the host. After the host receives the user operation data of the user equipment A, and enters the reverse control processing state, if an application program completes responding to and processing the user operation data, the host switches from the reverse control processing state to the idle state, to prepare for processing subsequently received user operation data.

Optionally, the host may perform status marking, determining, and switching by setting an identifier of a register. For example, when or after receiving first operation data collected by first user equipment in a first time interval, the host may immediately process the first operation data. When or in an allowable time error range after the host starts to process the first operation data, the host sets a flag bit (for example, sets the flag bit to 1) in the register or another similar storage area, to represent that the host is currently processing the operation data reported by the first user equipment. When completing processing the first operation data, the host sets a flag bit (for example, sets the flag bit to 1) in the register or another similar storage area, to represent that the host is currently in the idle state. In this way, the host may switch between different states by setting a flag bit. In addition, a current state of the host may be determined by using the flag bit. In addition, for details of status setting and switching on the host, refer to related apparatus embodiments. Details are not described.

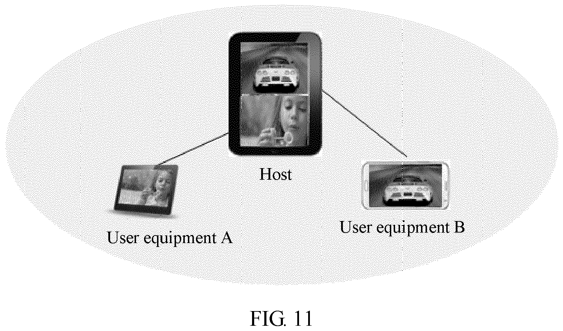

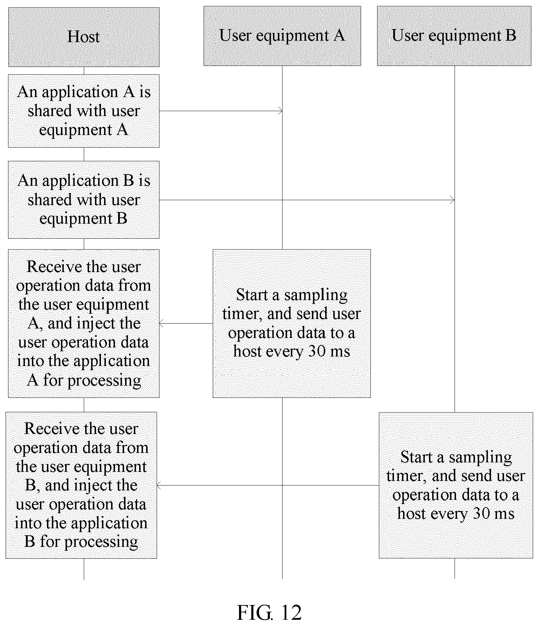

In some special scenarios such as an application-specific push scenario, that is, a host simultaneously runs an application A and an application B, user equipment A displays the application A on the host, and user equipment B displays the application B on the host. In this case, the host needs to provide a reverse control isolation function for user equipment, so that reverse control from the user equipment A is injected into the application A on the host, reverse control from the user equipment B is injected into the application B on the host, and no interference is caused to each other. FIG 11 shows such a reverse control isolation scenario. The host may run multiple applications such as a racing game or a gallery, the gallery is shared with the user equipment A, and the racing game is shared with the user equipment B. The two applications on the host may be displayed on a split-screen, or may run in the background. With reference to FIG 12, a cooperative control method procedure in the reverse control isolation scenario is described in detail in the following.

Step 1: The host shares the application A with the user equipment A by using a mirror function.

Step 2: A host end shares the application B with the user equipment B by using the mirror function.

Step 3: Separately start a sampling timer on the user equipment A and the user equipment B.

Step 4: The user equipment A and the user equipment B collect user operation data in a timing period of the sampling timer.

Step 5: When the sampling timer expires (that is, a current timing period of the sampling timer ends), the user equipment A and the user equipment B separately report the user operation data to the host. For specification of the sampling timer, refer to description of the foregoing embodiments.

Step 6: At the host end, after the user operation data reported by the user equipment A is received, inject the user operation data into the application A for processing, without affecting the application B.

Step 7: At the host end, after the user operation data reported by the user equipment B is received, inject the user operation data into the application B for processing, without affecting the application A.

In an embodiment, for a method for injecting user operation data into an application, refer to description of the foregoing embodiments. In addition, a method for injecting user operation data into a separate application may be selected according to features of systems, and directional injection may be selected, or a method for adding a label to user operation data may be used. For example, operation data reported by different user equipments may be distinguished by using different indexes (index), or operation data from user equipments for different applications may be distinguished by using different labels. This is not particularly limited in this embodiment of the present invention.

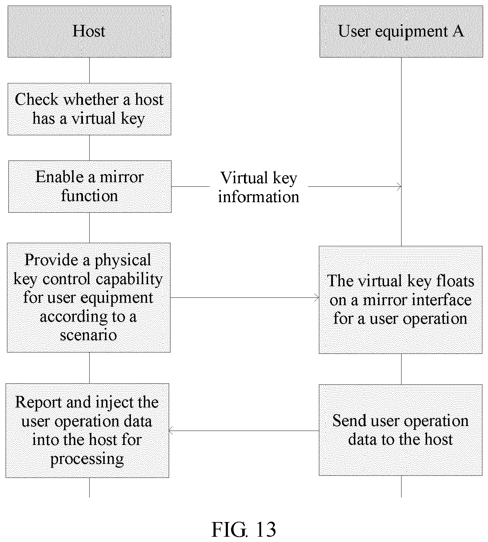

In some scenarios, there is no virtual key on a host, so that user equipment cannot perform an effective operation on a control key (such as BACK or HOME). This is because a physical key on user equipment needs to control the user equipment, and cannot reversely control the host. With reference to FIG 13, a cooperative control method procedure in this scenario is described in detail in the following.

Step 1: A host end checks virtual key information of the host.

Step 2: The host end shares with user equipment A by means of mirror, and informs the user equipment A of the virtual key information of the host.

Step 3: The host provides, according to a scenario, a function of reverse control over a physical key (such as HOME, BACK, MENU, and VOLUME+/-).

Step 4: On a mirror interface of the user equipment A, according to a virtual key information function of the host, create a floating virtual key that is not included at the host end and to be operated by a user. HOME, BACK, MENU, and VOLUME may float, or be added or deleted according to an actual scenario.

Step 5: When a user of the user equipment A taps a corresponding virtual key on a floating menu, transmit user operation data of the key to the host.

Step 6: After receiving the operation data from the user equipment A, the host performs reporting, injection, and processing.

Based on the foregoing cooperative control method for user equipment in multiple scenarios, the following describes in detail an embodiment of an apparatus that implements the foregoing methods.

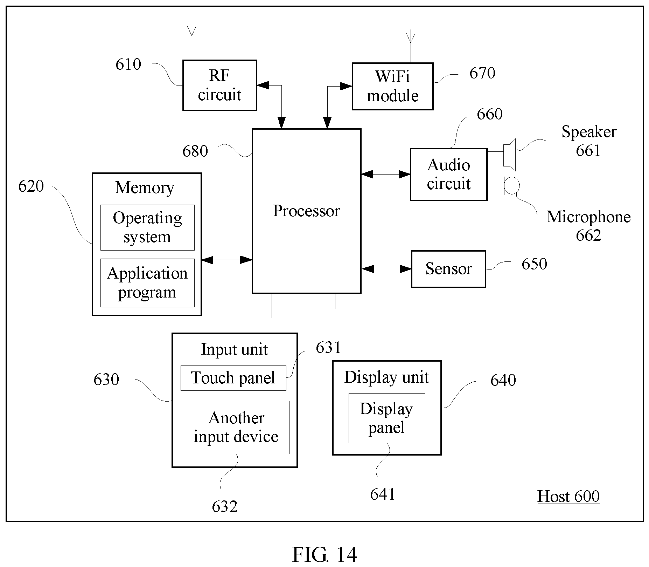

In an embodiment, referring to FIG 14, a host 600 in this embodiment of the present invention includes components such as a radio frequency (Radio Frequency, RF) circuit 610, a memory 620, an input unit 630, a display unit 640, a sensor 650, an audio circuit 660, a Wireless Fidelity (Wireless Fidelity, WiFi) module 670, a processor 680, and a power supply 690. Persons skilled in the art may understand that the structure of the host shown in FIG 6A and FIG 6B imposes no limitation on the host, and the host may include more or fewer components than those shown in the figure, or may combine some components, or may have different component arrangements.

The following describes in detail the components of the host 600 with reference to FIG 14.

The RF circuit 610 may be configured to receive and send information, or to receive and send a signal during a call. In particular, after receiving downlink information from a base station, the RF circuit 610 sends the downlink information to the processor 680 for processing. In addition, the RF circuit 610 sends uplink data to the base station. The RF circuit 610 usually includes but is not limited to an antenna, at least one amplifier, a transceiver, and a coupler. In addition, the RF circuit 610 may further communicate with a network and other devices by means of wireless communication. The foregoing wireless communication may use any communications standard or protocol, including but not limited to: Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, and a short message service (Short Messaging Service, SMS).

The memory 620 may be configured to store an operating system and an application program. By running the application program and the operating system that are stored in the memory 620 and by invoking a hardware resource, the processor 680 performs various functions and data processing. The processor 680 may specifically perform method steps described in FIG 5, FIG 9, FIG 10, FIG 12, and FIG 13 by executing the application program and the operating system that are stored in the memory 620, to implement corresponding functions. In addition, the memory 620 may include a high-speed random access memory, and may further include a nonvolatile memory, such as at least one magnetic disk storage component, a flash memory component, or another volatile solid-state storage component.

The input unit 630 may be configured to receive entered digital or character information, and generate key signal input related to user setting and function control of a mobile device. The input unit 630 may specifically include a touch panel 631 and another input device 632. The touch panel 631 is also referred to as a touchscreen, and may collect a touch operation performed by a user on or near the touch panel 631 (such as an operation performed by a user on the touch panel 631 or near the touch panel 631 by using any proper object or accessory, such as a finger or a stylus). In an embodiment of the present invention, the touch panel 731 detects an electrical signal brought by a touch operation of the user and a touch position of the user, reports detected touch information to the processor 680 in a form of a touch event, and receives and executes a command sent by the processor 680, to respond to the touch operation of the user. In addition to the touch panel 631, the input unit 630 may further include the another input device 632. The another input device 632 may specifically include but be not limited to one or more of a physical keyboard, a function key (for example, a volume control key or a power on/off key), a trackball, a mouse, or a joystick.

The display unit 640 may be configured to display a system desktop or a graphical interface of the application program. The display unit 640 may include a display panel 641. Optionally, the display unit 640 may be a liquid crystal display (Liquid Crystal Display, LCD), an organic light-emitting diode (Organic Light-Emitting Diode, OLED), or the like. Further, the touch panel 631 may cover the display panel 641. When detecting a touch operation on or near the touch panel 631, the touch panel 631 transmits a touch event to the processor 680 to determine a type of the touch event. Then the processor 680 provides a corresponding visual output on the display panel 641 according to the type of the touch event, for example, update a currently displayed graphical interface of the application program. Although the touch panel 631 and the display panel 641 in FIG 6A and FIG 6B are used as two separate parts to implement input and input functions of the mobile device, in some embodiments, the touch panel 631 and the display panel 641 may be integrated to implement the input and output functions of the mobile device.

The host 600 may further include at least one type of sensor 650, such as a light sensor, a motion sensor, and another sensor. A gyroscope, a barometer, a hygrometer, a thermometer, an infrared sensor, and other sensors may be further configured on the host, and details are not described herein.

The audio circuit 660, a speaker 661, and a microphone 662 may provide an audio interface between the user and the host. The audio circuit 660 may convert received audio data into an electrical signal, and transmit the electrical signal to the speaker 661, and the speaker 661 converts the electrical signal into a voice signal for output. On the other hand, the microphone 662 converts the collected voice signal into an electrical signal, and the audio circuit 660 receives the electrical signal, converts the electrical signal into audio data, and outputs the audio data to the processor 680 for processing, so as to send the audio data to another user equipment by using the RF circuit 610, or output the audio data to the memory 620 for further processing.

WiFi is a short-distance wireless transmission technology. In this embodiment of the present invention, the host 600 may implement interconnection with another user equipment by using the WiFi module 670. For example, the host 600 may capture content (such as the graphical interface of the application program) displayed by the display unit 640, and after performing compression and coding on a captured image, the host transmits, in real-time, the image to another user equipment by using the WiFi module 670. After receiving the compressed image, the another user equipment decodes and displays the image, so that multiple devices can share content in real-time. Although the WiFi module 670 is shown in FIG 6A and FIG 6B, it may be understood that the WiFi module 670 is not a mandatory component of the mobile device, and may be omitted as required or replaced by using another communications module.

The processor 680 is a control center of the host, and uses various interfaces and buses to connect all parts of the entire host. By running the operating system and the application program that are stored in the memory 620, the processor 680 executes various functions of the host. Although not shown, the host 600 may further include a camera, a Bluetooth module, and the like, and details are not described herein.

Based on the foregoing description of the components of the host 600, a process in which the host 600 and multiple user terminals perform cooperative control in a multi-party cooperative scenario is described in the following. The processor 680 captures, in real-time and by reading and executing the application program stored in the memory 620, an image displayed by the display unit 640. After compressing the captured image, the processor 680 transmits, in real-time, the image to another user equipment (first user equipment and second user equipment are used as an example for description herein) by using the WiFi module 670. After receiving the compressed image, the first user equipment and the second user equipment decode and display the image. In this way, without considering transmission and processing delays, the host, the first user equipment, and the second user equipment display consistent content, so that multiple devices can share displayed content in real-time. Further, users of the first user equipment and the second user equipment may perform an operation on the displayed content. The first user equipment and the second user equipment periodically collect operation data generated by respective user operations, and report the operation data to the host. At a host end, after the WiFi module 670 receives operation data sent by any user equipment, the processor 680 records the operation data in the memory 620. At the same time, the processor 680 starts a monitor timer program, and records, in a timing period of the monitor timer, operation data reported by the user equipment into the memory 620. Operation data reported by different user equipments has different indexes (index). The processor 680 may record, according to a reporting sequence, operation data reported by user equipment. Further, when the monitor timer expires, the processor 680 combines the operation data recorded in the memory 620 into one piece of combined operation data, and injects the combined operation data into the operating system for processing. In this way, a currently running application program of the host may capture and respond to the combined operation data. Processes in which the host 600 and multiple user terminals perform cooperative control in a single-point mutual exclusion scenario and a reverse control isolation scenario are similar to the foregoing description, and details are not described herein.

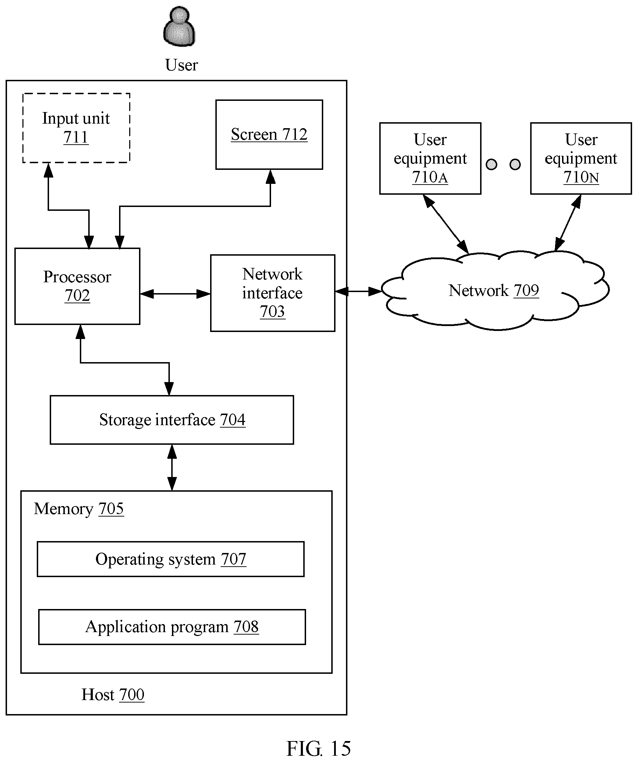

Referring to FIG 15, an embodiment of the present invention further provides a host 700, configured to perform the process described in the method embodiments of the present invention. The host 700 includes a processor 702, a memory 705, a network interface 703, and a screen 712. Optionally, the host 700 further includes an input unit 711, and the input unit 711 may include a touch panel, a physical keyboard, or another input device. The host 700 is connected to a network 709 by using the network interface 703, and is further interconnected to user equipment connected to the network 709, such as first user equipment and second user equipment (user equipments 710A to 710N that are in FIG 15 are used as an example for description). In this embodiment of the present invention, the user equipment 710A is also referred to as the first user equipment, and the user equipment 710N is also referred to as the second user equipment. The network interface 703 may use a communications protocol including but not limited to: an Ethernet protocol, TCP/IP (Transmission Control Protocol/Internet Protocol), and IEEE 802. 11a/b/g/n/x. The network 709 includes but is not limited to a local area network (LAN), a wide area network (WAN), a wireless network, and Internet.

The processor 702 may communicate with the memory 705 (such as a RAM and a ROM) by using a storage interface 704. The storage interface 704 includes but is not limited to: a memory driver and a removable disk driver. The storage interface 704 may be connected to the memory 705 by using a connection protocol such as Serial Advanced Technology Attachment (SATA), Integrated Drive Electronics (Integrated Drive Electronics, IDE), Universal Serial Bus (USB), or Small Computer System Interface (SCSI).

The memory 705 may store a program and a component, including but not limited to an operating system 707 and an application program 708.

In an embodiment, the application program stored in the memory 705 includes a target application. The processor 702 reads and executes the target application stored in the memory 705, and displays a graphical interface generated by the target application by using the screen 712. At the same time, the processor 702 captures, by running a mirror program, a graphical interface displayed on the screen 712, and transmits the graphical interface to the first user equipment 710A and the second user equipment 710N in real-time. In this way, the first user equipment, the second user equipment, and the screen 712 of the host 700 display a graphical interface with consistent content, so that multi-screen sharing is implemented.

Further, first operation data collected by the first user equipment in a first time interval may be sent to the host 700 by using the network interface 703. After the host 700 receives the first operation data sent by the first user equipment, the processor 702 runs a timer program, to start the timer. In addition, if the network interface 703 receives, in a timing period of the timer, second operation data collected by the second user equipment in a second time interval, after the timing period ends, the processor 702 combines the first operation data and the second operation data to obtain combined operation data, updates a graphical interface of the target application according to the combined operation data, displays an updated graphical interface on the screen 712, and sends content included in the updated graphical interface of the target application to the first user equipment 710A and the second user equipment 710N by using the network interface 703.

Further, in an embodiment, if in the timing period, a user of the host 700 performs an operation on a displayed graphical interface of the target application by using the input unit 711, the processor 702 may combine local user operation data generated by the operation of the user of the host 700, the first operation data, and the second operation data, to obtain combined operation data, and process the combined operation data. Optionally, the local user operation data, the first operation data, and the second operation data may be either a single-point touch event or a multi-point touch event. In addition, for details of combining and processing the operation data, refer to the foregoing other embodiments. Details are not described.

Optionally, in another embodiment, when or after receiving first operation data collected by the first user equipment in a first time interval by using the network interface 703, the processor 702 may immediately process the first operation data. When or in an allowable time error range after the processor 702 starts to process the first operation data, the processor 702 may set a reverse control processing state A used to represent that the host 700 is currently processing the operation data reported by the first user equipment. When completing processing the first operation data, the processor 702 sets a status mark used to represent that the host is currently in an idle state. In this way, the host 700 may switch between different states.

Further, when the host is processing the first operation data, that is, the host 700 is in the reverse control processing state A, if the network interface 703 receives second operation data collected by the second user equipment in a second time interval, the second operation data is discarded. When the host 700 is in an idle state A, if the network interface 703 receives second operation data collected by the second user equipment in a second time interval, similar to the foregoing processing manner for the first operation data, the processor 702 may immediately process the second operation data, and set a reverse control processing state B used to represent that the host 700 is currently processing the operation data reported by the second user equipment. When completing processing the second operation data, the processor 702 sets a status mark used to represent that the host is currently in the idle state. Further, when the host 700 is processing the first operation data, that is, the host 700 is in the reverse control processing state A, if the network interface 703 receives another operation data reported by the first user equipment again, the processor 702 may continue to process the another operation data reported by the first user equipment, and remain in the reverse control processing state A. Optionally, the processor 702 may discard and not process the operation data.

It should be noted that in the foregoing description, switch of the host in different states is triggered based on a processing state of the operation data by the host. Alternatively, switch of the host in different states may be triggered according to a type of operation data. For example, if the host 700 in the reverse control processing state A receives operation data representing that the user of the first user equipment stops the operation, the host 700 switches to the idle state. For details of status setting and switching on the host, refer to the foregoing other embodiments. Details are not described.

In another embodiment, the application program stored in the memory 705 includes a first application and a second application. The processor 702 reads and executes the first application and the second application that are stored in the memory 705, and displays, by using the screen 712, graphical interfaces generated by the first application and the second application. Specifically, a graphical interface of the first application may be displayed in a first area of the screen 712, and a graphical interface of the second application may be displayed in a second area of the screen 712. At the same time, by running a mirror program, the processor 702 captures the graphical interface displayed in the first area of the screen 712, and transmits the graphical interface to the first user equipment 710A in real-time, and the processor 702 captures the graphical interface displayed in the second area of the screen 712, and transmits the graphical interface to the second user equipment 710N in real-time. In this way, the first user equipment and the first area of the screen 712 display a graphical interface with consistent content, and the first user equipment and the second area of the screen 712 display a graphical interface with consistent content, so that multiple applications can be shared by using multiple user equipments.

Further, the host 700 may separately receive, by using the network interface 703, the first operation data collected by the first user equipment, and receive the second operation data collected by the second user equipment. The processor 702 is configured to respond to and process the first operation data and the second operation data. Specifically, the processor 702 updates a currently displayed graphical interface of the first application according to the first operation data, and displays, in the first area, an updated graphical interface of the first application, and the processor 702 updates a currently displayed graphical interface of the second application according to the second operation data, and displays, in the second area, an updated graphical interface of the second application. Further, the processor 702 may send content included in the updated graphical interface of the first application to the first user equipment by using the network interface 703, and may send content included in the updated graphical interface of the second application to the second user equipment by using the network interface 703.

Optionally, the first user equipment and the second user equipment may periodically report operation data of respective users to the host 700. Optionally, if the host 700 receives, in a relatively short time interval (such as 30 ms), operation data sent by same user equipment, the host 700 may combine the operation data and process the combined operation data.

An embodiment of the present invention further provides a communications system, including the host 700, the first user equipment 710A, and the second user equipment 710N. For specific functions and operation procedures of the host 700, the first user equipment, and the second user equipment, refer to the foregoing method and apparatus embodiments. Details are not described herein.

According to the cooperative control method for user equipment, the terminal device, and the communications system provided in the embodiments of the present invention, a host uses operation data of each user equipment as one control data input; and performs, according to different application scenarios, combination, mutual exclusion, and isolation on multiple pieces of user operation data of multiple user equipments, before injection into different applications. In this way, in different scenarios, when a host performs multi-screen interaction with multiple user equipments, reverse control data of multiple user equipments does not interfere with each other, so that multiple parties can perform a perfect cooperative operation on multiple devices.

The cooperative control method for user equipment, the host, and the system provided in the embodiments of the present invention are described in detail above. The principle and implementations of the present invention are described in this specification by using specific examples. The description about the foregoing embodiments is merely provided to help understand the method and core ideas of the present invention. In addition, persons of ordinary skill in the art can make modifications in terms of the specific implementations and application scopes according to the ideas of the present invention. Therefore, the content of this specification shall not be construed as a limit to the present invention, which was the scope established by the appended set of claims.

## Claims

1. A cooperative control method for user equipment, applied to a host (700), wherein the host is interconnected to first user equipment (710A) and second user equipment (710N) by using a network, the host runs a first application and a second application, a first area of a screen (712) of the host displays a graphical interface of the first application, a second area of the screen of the host displays a graphical interface of the second application, and the first area and the second area are independent of each other; a graphical interface displayed on the first user equipment and the graphical interface displayed in the first area have consistent content, and a graphical interface displayed on the second user equipment and the graphical interface displayed in the second area have consistent content; and the method comprises:
receiving, by the host, first operation data sent by the first user equipment, wherein the first operation data is generated according to an operation performed by a user on the graphical interface displayed on the first user equipment;
processing, by the host, the first operation data, wherein the processing step comprises: updating a currently displayed graphical interface of the first application in the first area according to the first operation data;
synchronizing, by the host, an updated graphical interface of the first application to the first user equipment;
receiving, by the host, second operation data sent by the second user equipment, wherein the second operation data is generated according to an operation performed by a user on the second user equipment;
processing, by the host, the second operation data, wherein the processing step comprises: updating a currently displayed graphical interface of the second application in the second area according to the second operation data; and
synchronizing, by the host, an updated graphical interface of the second application to the second user equipment.

2. The method according to claim 1, wherein the first operation data is collected by the first user equipment in a first time interval, the second operation data is collected by the second user equipment in a second time interval, the first time interval is a timing period of a first sampling timer running on the first user equipment, the second time interval is a timing period of a second sampling timer running on the second user equipment, the first sampling timer starts after or when the user operates on the first user equipment, and the second sampling timer starts after or when the user operates on the second user equipment.

3. The method according to claim 2, wherein the first time interval is equal to the second time interval.

4. A host (700), comprising: a processor (702), a memory (705), a network interface (703), and a screen (712), wherein the host is connected to first user (710A) equipment and second user equipment (710N) by using the network interface; the processor is configured to: read and execute a first application and a second application that are stored in the memory, display a graphical interface of the first application in a first area of the screen, and display a graphical interface of the second application in a second area of the screen; and a graphical interface displayed on the first user equipment and the graphical interface displayed in the first area have consistent content, and a graphical interface displayed on the second user equipment and the graphical interface displayed in the second area have consistent content;
the network interface is configured to: receive first operation data sent by the first user equipment, and receive second operation data sent by the second user equipment, wherein the first operation data is generated according to an operation performed by a user on the graphical interface displayed on the first user equipment, and the second operation data is generated according to an operation performed by a user on the second user equipment; and
the processor is configured to: update a currently displayed graphical interface of the first application according to the first operation data, and display, in the first area, an updated graphical interface of the first application; update a currently displayed graphical interface of the second application according to the second operation data, and display, in the second area, an updated graphical interface of the second application; and send content comprised in the updated graphical interface of the first application to the first user equipment by using the network interface, and send content comprised in the updated graphical interface of the second application to the second user equipment by using the network interface.

5. A computer readable storage medium (705), wherein the computer readable storage medium stores code and/or data, when a computer system reads and runs the code and/or data stored in the computer readable storage media, the computer system execute the method according to any one of claim 1 to 3.

## Patentansprüche

1. Verfahren zur kooperativen Steuerung von Benutzereinrichtungen, das auf einen Host (700) angewendet wird, wobei der Host mit einer ersten Benutzereinrichtung (710A) und einer zweiten Benutzereinrichtung (710N) unter Verwendung eines Netzwerks verbunden ist, der Host eine erste Anwendung und eine zweite Anwendung ausführt, ein erster Bereich eines Bildschirms (712) des Hosts eine grafische Schnittstelle der ersten Anwendung anzeigt, ein zweiter Bereich des Bildschirms des Hosts eine grafische Schnittstelle der zweiten Anwendung anzeigt und der erste Bereich und der zweite Bereich unabhängig voneinander sind; eine auf der ersten Benutzereinrichtung angezeigte grafische Schnittstelle und die im ersten Bereich angezeigte grafische Schnittstelle konsistenten Inhalt aufweisen und eine auf der zweiten Benutzereinrichtung angezeigte grafische Schnittstelle und die im zweiten Bereich angezeigte grafische Schnittstelle konsistenten Inhalt aufweisen; und das Verfahren folgende Vorgänge umfasst:
Empfangen, durch den Host, von ersten Operationsdaten, die von der ersten Benutzereinrichtung gesendet werden, wobei die ersten Operationsdaten gemäß einer Operation erzeugt werden, die von einem Benutzer auf der grafischen Schnittstelle, die an der ersten Benutzereinrichtung angezeigt wird, durchgeführt wird;
Verarbeiten, durch den Host, der ersten Operationsdaten, wobei der Verarbeitungsschritt umfasst: Aktualisieren einer derzeit angezeigten grafischen Schnittstelle der ersten Anwendung im ersten Bereich gemäß den ersten Operationsdaten;
Synchronisieren, durch den Host, einer aktualisierten grafischen Schnittstelle der ersten Anwendung mit der ersten Benutzereinrichtung;
Empfangen, durch den Host, von zweiten Operationsdaten, die von der zweiten Benutzereinrichtung gesendet werden, wobei die zweiten Operationsdaten gemäß einer von einem Benutzer an der zweiten Benutzereinrichtung durchgeführten Operation erzeugt werden;
Verarbeiten, durch den Host, der zweiten Operationsdaten, wobei der Verarbeitungsschritt umfasst: Aktualisieren einer derzeit angezeigten grafischen Schnittstelle der zweiten Anwendung im zweiten Bereich gemäß den zweiten Operationsdaten; und
Synchronisieren, durch den Host, einer aktualisierten grafischen Schnittstelle der zweiten Anwendung mit dem zweiten Benutzergerät.

2. Verfahren nach Anspruch 1, wobei die ersten Operationsdaten von der ersten Benutzereinrichtung in einem ersten Zeitintervall gesammelt werden, die zweiten Operationsdaten von der zweiten Benutzereinrichtung in einem zweiten Zeitintervall gesammelt werden, das erste Zeitintervall eine Zeitperiode eines ersten Abtastzeitgebers ist, der auf der ersten Benutzereinrichtung ausgeführt wird, das zweite Zeitintervall eine Zeitperiode eines zweiten Abtastzeitgebers ist, der auf der zweiten Benutzereinrichtung ausgeführt wird, der erste Abtastzeitgeber startet, nachdem oder wenn der Benutzer auf der ersten Benutzereinrichtung eine Operation durchführt, und der zweite Abtastzeitgeber startet, nachdem oder wenn der Benutzer auf der zweiten Benutzereinrichtung eine Operation durchführt.

3. Verfahren nach Anspruch 2, wobei das erste Zeitintervall gleich dem zweiten Zeitintervall ist.

4. Host (700), umfassend: einen Prozessor (702), einen Speicher (705), eine Netzwerkschnittstelle (703) und einen Bildschirm (712), wobei der Host mit einer ersten Benutzereinrichtung (710A) und einer zweiten Benutzereinrichtung (710N) unter Verwendung der Netzwerkschnittstelle verbunden ist; wobei der Prozessor für folgende Vorgänge ausgelegt ist: Lesen und Ausführen einer ersten Anwendung und einer zweiten Anwendung, die im Speicher gespeichert sind, Anzeigen einer grafischen Schnittstelle der ersten Anwendung in einem ersten Bereich des Bildschirms und Anzeigen einer grafischen Schnittstelle der zweiten Anwendung in einem zweiten Bereich des Bildschirms; und wobei eine grafische Schnittstelle, die auf der ersten Benutzereinrichtung angezeigt wird, und die grafische Schnittstelle, die im ersten Bereich angezeigt wird, konsistenten Inhalt aufweisen, und eine grafische Schnittstelle, die auf der zweiten Benutzereinrichtung angezeigt wird, und die grafische Schnittstelle, die im zweiten Bereich angezeigt wird, konsistenten Inhalt aufweisen;
wobei die Netzwerkschnittstelle für folgende Vorgänge ausgelegt ist: Empfangen von ersten Operationsdaten, die von der ersten Benutzereinrichtung gesendet werden, und Empfangen von zweiten Operationsdaten, die von der zweiten Benutzereinrichtung gesendet werden, wobei die ersten Operationsdaten gemäß einer von einem Benutzer auf der an der ersten Benutzereinrichtung angezeigten grafischen Schnittstelle durchgeführten Operation erzeugt werden, und die zweiten Betriebsdaten gemäß einer von einem Benutzer an der zweiten Benutzereinrichtung durchgeführten Operation erzeugt werden; und
der Prozessor für folgende Vorgänge ausgelegt ist: Aktualisieren einer derzeit angezeigten grafischen Schnittstelle der ersten Anwendung gemäß den ersten Operationsdaten und Anzeigen, im ersten Bereich, einer aktualisierten grafischen Schnittstelle der ersten Anwendung; Aktualisieren einer derzeit angezeigten grafischen Schnittstelle der zweiten Anwendung gemäß den zweiten Operationsdaten und Anzeigen, im zweiten Bereich, einer aktualisierten grafischen Schnittstelle der zweiten Anwendung; und Senden eines in der aktualisierten grafischen Schnittstelle der ersten Anwendung enthaltenen Inhalts unter Verwendung der Netzwerkschnittstelle an die erste Benutzereinrichtung, und Senden eines in der aktualisierten grafischen Schnittstelle der zweiten Anwendung enthaltenen Inhalts unter Verwendung der Netzwerkschnittstelle an die zweite Benutzereinrichtung.

5. Computerlesbares Speichermedium (705), wobei auf dem computerlesbaren Speichermedium Code und/oder Daten gespeichert sind, und wenn ein Computersystem den Code und/oder die Daten, die im computerlesbaren Speichermedium gespeichert sind, liest und ausführt, das Computersystem das Verfahren nach einem der Ansprüche 1 bis 3 durchführt.

## Revendications

1. Procédé de commande coopérative pour un équipement d'utilisateur, appliqué à un hôte (700), l'hôte étant interconnecté à un premier équipement d'utilisateur (710A) et à un second équipement d'utilisateur (710N) au moyen d'un réseau, l'hôte exécutant une première application et une seconde application, une première zone d'un écran (712) de l'hôte affichant une interface graphique de la première application, une seconde zone de l'écran de l'hôte affichant une interface graphique de la seconde application, et la première zone et la seconde zone étant indépendantes l'une de l'autre ; une interface graphique affichée sur le premier équipement utilisateur et l'interface graphique affichée dans la première zone ayant un contenu cohérent, et une interface graphique affichée sur le second équipement utilisateur et l'interface graphique affichée dans la seconde zone ayant un contenu cohérent ; et le procédé comprenant les étapes consistant à :
recevoir, par l'hôte, des premières données d'opération envoyées par le premier équipement d'utilisateur, les premières données d'opération étant générées selon une opération effectuée par un utilisateur sur l'interface graphique affichée sur le premier équipement d'utilisateur ;
traiter, par l'hôte, les premières données d'opération, l'étape de traitement comprenant l'étape consistant à : mettre à jour une interface graphique actuellement affichée de la première application dans la première zone selon les premières données d'opération ;
synchroniser, par l'hôte, une interface graphique mise à jour de la première application avec le premier équipement d'utilisateur ;
recevoir, par l'hôte, des secondes données d'opération envoyées par le second équipement d'utilisateur, les secondes données d'opération étant générées selon une opération effectuée par un utilisateur sur le second équipement d'utilisateur ;
traiter, par l'hôte, les secondes données d'opération, l'étape de traitement comprenant l'étape consistant à : mettre à jour une interface graphique actuellement affichée de la seconde application dans la seconde zone selon les secondes données d'opération ; et synchroniser, par l'hôte, une interface graphique mise à jour de la seconde application avec le second équipement d'utilisateur.

2. Procédé selon la revendication 1, dans lequel les premières données d'opération sont collectées par le premier équipement d'utilisateur dans un premier intervalle de temps, les secondes données d'opération sont collectées par le second équipement d'utilisateur dans un second intervalle de temps, le premier intervalle de temps est une période de synchronisation d'un premier temporisateur d'échantillonnage s'exécutant sur le premier équipement d'utilisateur, le second intervalle de temps est une période de synchronisation d'un second temporisateur d'échantillonnage s'exécutant sur le second équipement d'utilisateur, le premier temporisateur d'échantillonnage démarre après que l'utilisateur a opéré ou lorsque l'utilisateur opère sur le premier équipement d'utilisateur, et le second temporisateur d'échantillonnage démarre après que l'utilisateur a opéré ou lorsque l'utilisateur opère sur le second équipement d'utilisateur.

3. Procédé selon la revendication 2, dans lequel le premier intervalle de temps est égal au second intervalle de temps.

4. Hôte (700) comprenant : un processeur (702), une mémoire (705), une interface de réseau (703) et un écran (712), l'hôte étant connecté à un premier équipement d'utilisateur (710A) et à un second équipement d'utilisateur (710N) au moyen de l'interface de réseau ; le processeur étant configuré pour : lire et exécuter une première application et une seconde application qui sont stockées dans la mémoire, afficher une interface graphique de la première application dans une première zone de l'écran et afficher une interface graphique de la seconde application dans une seconde zone de l'écran ; et une interface graphique affichée sur le premier équipement utilisateur et l'interface graphique affichée dans la première zone ayant un contenu cohérent, et une interface graphique affichée sur le second équipement utilisateur et l'interface graphique affichée dans la seconde zone ayant un contenu cohérent ;
l'interface de réseau étant configurée pour : recevoir des premières données d'opération envoyées par le premier équipement d'utilisateur et recevoir des secondes données d'opération envoyées par le second équipement d'utilisateur, les premières données d'opération étant générées selon une opération effectuée par un utilisateur sur l'interface graphique affichée sur le premier équipement d'utilisateur et les secondes données d'opération étant générées selon une opération effectuée par un utilisateur sur le second équipement d'utilisateur ; et
le processeur étant configuré pour : mettre à jour une interface graphique actuellement affichée de la première application selon les premières données d'opération et afficher, dans la première zone, une interface graphique mise à jour de la première application ; mettre à jour une interface graphique actuellement affichée de la seconde application selon les secondes données d'opération et afficher, dans la seconde zone, une interface graphique mise à jour de la seconde application ; et envoyer le contenu compris dans l'interface graphique mise à jour de la première application au premier équipement utilisateur au moyen de l'interface de réseau et envoyer le contenu compris dans l'interface graphique mise à jour de la seconde application au second équipement d'utilisateur au moyen de l'interface de réseau.

5. Support de stockage lisible par ordinateur (705), le support de stockage lisible par ordinateur stockant un code et/ou des données, et lorsqu'un système informatique lit et exécute le code et/ou les données stockés sur le support de stockage lisible par ordinateur, le système informatique exécutant le procédé selon l'une quelconque des revendications 1 à 3.
